(19) Europäisches Patentamt
European Patent Office
Office européen des brevets

(11) EP 2 745 919 A1

(12) EUROPEAN PATENT APPLICATION
published in accordance with Art. 153(4) EPC

(43) Date of publication:
**25.06.2014 Bulletin 2014/26**

(21) Application number: **12835897.5**

(22) Date of filing: **24.09.2012**

(51) Int Cl.:
***B01D 71/56*** (2006.01) ***B01D 69/10*** (2006.01)
***B01D 69/12*** (2006.01) ***C08G 69/02*** (2006.01)

(86) International application number:
**PCT/JP2012/074322**

(87) International publication number:
**WO 2013/047398 (04.04.2013 Gazette 2013/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 JP 2011214220**

(71) Applicant: **Toray Industries, Inc.**
**Tokyo 103-8666 (JP)**

(72) Inventors:
- **TAKAYA, Kiyohiko**
  **Otsu-shi**
  **Shiga 520-8558 (JP)**
- **NAKATSUJI, Koji**
  **Otsu-shi**
  **Shiga 520-8558 (JP)**
- **KIMURA, Masahiro**
  **Otsu-shi,**
  **Shiga 520-8558 (JP)**
- **SASAKI, Takao**
  **Otsu-shi**
  **Shiga 520-8558 (JP)**
- **SHIMURA, Harutoki**
  **Otsu-shi**
  **Shiga 520-8558 (JP)**

(74) Representative: **Hoefer & Partner**
**Pilgersheimer Straße 20**
**81543 München (DE)**

# (54) COMPOSITE SEMIPERMEABLE MEMBRANE

(57) There are provided a composite semipermeable membrane including a porous support membrane made of a substrate and a porous support layer and a polyamide separation-functional layer disposed on the porous support layer, wherein the zeta potential of the separation-functional layer at pH 6 is -20 mV or lower, and the zeta potential difference between potentials of the separation-functional layer at pH 10 and pH 3 is 25 mV or smaller, and a production method of a composite semipermeable membrane having high water permeability and high salt rejection performance and having high acid/alkali durability.

EP 2 745 919 A1

## Description

### TECHNICAL FIELD

The present invention relates to a composite semipermeable membrane having high water permeability and high salt rejection performance and having high acid/alkali durability. The composite semipermeable membrane obtained by the present invention can be suitably used for conversion of seawater or saline water to fresh water.

### BACKGROUND ART

With regard to separation of a mixture, there are various kinds of techniques for removing a substance (such as salts) dissolved in a solvent (such as water). In recent years, as a process for energy saving and resource saving, there has been an increase in the utilization of a membrane separation process. Examples of a membrane used in a membrane separation process include a microfiltration membrane, an ultrafiltration membrane, a nano-filtration membrane, a reverse osmosis membrane and the like. These membranes are used, for example, in the case of obtaining potable water from seawater, saline water, water containing a harmful substance and the like, and for the production of industrial ultrapure water, the wastewater treatment, the recovery of valuables and the like.

Most of the reverse osmosis membranes and the nano-filtration membranes currently sold on the market are composite semipermeable membranes, and the membranes are classified into two kinds of one having a gel layer and an active layer crosslinked with a polymer on a porous support membrane and another having an active layer formed by subj ecting monomers to polycondensation on a porous support membrane. Of these, a composite semipermeable membrane obtained by covering a porous support membrane with a separation-functional layer made of a crosslinked polyamide obtained from the polycondensation reaction of a polyfunctional amine with a polyfunctional acyl halide has been widely used as a separation membrane which is high in permeability and selective separability.

In a desalination plant using a reverse osmosis membrane, higher water permeability is demanded in order to further reduce the running cost. In response to such demands, with regard to a composite semipermeable membrane including a crosslinked polyamide polymer as a separation active layer, a method of bringing the membrane into contact with an aqueous solution containing nitrous acid (Patent Document 1), a method of bringing the membrane into contact with an aqueous solution containing chlorine (Patent Document 2), and the like have been known.

Moreover, one of the problems that occur at a desalination plant using a reverse osmosis membrane is fouling due to an inorganic substance or an organic substance. With regard to the reverse osmosis membrane, the water permeability is remarkably lowered because of the fouling. As a method for remedying this problem, a method of suppressing the fouling by coating the separation-functional layer surface with polyvinyl alcohol and allowing the charged state to become neutral (Patent Document 3), and the like have been proposed. However, in this method, there is a problem that the water permeability is lowered because the separation-functional layer surface is coated.

On the other hand, a method of recovering the water permeability by washing the reverse osmosis membrane whose water permeability is lowered because of the fouling and the like with chemicals such as an acid and an alkali (Patent Document 4), and the like have been also proposed.

### PRIOR ART DOCUMENTS

### PATENT DOCUMENTS

Patent Document 1: Japanese Patent Laid-open Publication No. 2011-125856
Patent Document 2: Japanese Patent Laid-open Publication No. 63-54905
Patent Document 3: International Publication No. WO97/34686
Patent Document 4: Japanese Patent Laid-open Publication No. 10-66972

### SUMMARY OF THE INVENTION

### PROBLEMS TO BE SOLVED BY THE INVENTION

In this way, examples of the performance required for a reverse osmosis membrane include not only salt rejection performance and water permeability, but also antifouling property, chemical durability and the like. With regard to the membranes described in Patent Document 1 and Patent Document 2, although it is possible to enhance the water permeability, there is a problem that the chemical resistance is low.

An object of the present invention is to provide a composite semipermeable membrane having high water permeability and high salt rejection performance and having high acid/alkali resistance.

SOLUTIONS TO THE PROBLEMS

The present invention for attaining the above-mentioned object includes the following constitution.

(1) A composite semipermeable membrane including a porous support membrane made of a substrate and a porous support layer and a polyamide separation-functional layer disposed on the porous support layer, wherein the zeta potential of the separation-functional layer at pH 6 is -20 mV or lower, and the zeta potential difference between potentials of the separation-functional layer at pH 10 and pH 3 is 25 mV or smaller.
(2) The composite semipermeable membrane described in (1), wherein the mean-square surface roughness of the separation-functional layer is 60 nm or more.
(3) The composite semipermeable membrane described in (1) or (2), wherein the difference between a peak top frequency of an amide group at 30°C and a peak top frequency of an amide group at 120°C is 5 $cm^{-1}$ or smaller when an infrared absorption spectrum of the separation-functional layer surface is measured in a heating process using an ATR method and a peak of an amide group that appears in the range of 1540 $\pm$ 10 $cm^{-1}$ is measured.
(4) The composite semipermeable membrane described in (3), wherein Value X calculated from the following equation (1) is 0.80 or more when an infrared absorption spectrum of the separation-functional layer surface is measured in a heating process using an ATR method:

Equation (1)

$$X = Abs\ (120°C)/Abs\ (30°C)$$

Abs (120°C) is infrared absorption intensity at 1545 $cm^{-1}$ obtained when measured at 120°C and Abs (30°C) is infrared absorption intensity at 1545 $cm^{-1}$ obtained when measured at 30°C; in this connection, the infrared absorption intensity is a value obtained after subjecting measurement data to primary baseline correction ranging from 1000 $cm^{-1}$ to 1900 $cm^{-1}$ and normalizing the data by defining the peak at 1250 $cm^{-1}$ as 1.
(5) The composite semipermeable membrane described in any one of (1) to (4), wherein the substrate of the porous support membrane is a polyester filament nonwoven fabric and the air permeability thereof is 2.0 $cc/cm^2/sec$ or more.
(6) The composite semipermeable membrane described in any one of (1) to (5), wherein the thickness of the porous support layer is 20 to 40 $\mu$m.

EFFECTS OF THE INVENTION

According to the present invention, it is possible to provide a composite semipermeable membrane having high water permeability and high salt rejection performance and having high acid/alkali durability. Thus, according to the composite semipermeable membrane, it becomes possible to obtain permeated water of high quality while achieving energy saving. Moreover, it is possible to obtain a membrane which is durability against acid washing, alkali washing and the like.

MODE FOR CARRYING OUT THE INVENTION

1. Composite semipermeable membrane

The composite semipermeable membrane according to the present invention includes a porous support membrane made of a substrate and a porous support layer and a polyamide separation-functional layer formed on the porous support membrane. The composite semipermeable membrane according to the present invention is characterized in that the zeta potential of the separation-functional layer at pH 6 is -20 mV or lower and the zeta potential difference between potentials of the separation-functional layer at pH 10 and pH 3 is 25 mV or smaller.

1-1. Porous support membrane

The porous support membrane is intended for imparting the polyamide separation-functional layer having separation performance with strength and has substantially no separation performance to ions and the like in itself. The porous support membrane is made of a substrate and a porous support layer.

Although the size and distribution of pores in the porous support membrane are not particularly limited, for example, preferred is a support membrane having uniform and fine pores or fine pores progressively increasing in diameter from a surface of the side on which the separation-functional layer is formed toward the other face and allowing the size of fine pores at a surface of the side on which the separation-functional layer is formed to be 0.1 nm or more and 100 nm or less.

For example, the porous support membrane can be obtained by allowing a high molecular weight polymer to be cast on a substrate and forming a porous support layer on the substrate. Materials used for the porous support membrane and the shape thereof are not particularly limited.

An example of the substrate is a fabric of at least one kind selected from among a polyester and an aromatic polyamide. It is especially preferred to use a polyester which is high in mechanical and thermal stability.

As the fabric used for the substrate, a filament nonwoven fabric and a staple fiber nonwoven fabric can be preferably used. A filament nonwoven fabric is more preferably used because excellent membrane-forming properties, such that a solution of a high molecular weight polymer does not strike through to the back side of a substrate due to excessive permeation at the time of allowing the solution to be cast on the substrate, the porous support layer does not peel off from the substrate, and furthermore, unevenness of the membrane caused by the fluffing of the substrate and the like is not developed and defects such as a pinhole are not generated, are required. Examples of the filament nonwoven fabric include a filament nonwoven fabric constituted of a thermoplastic continuous filament, and the like. Since the substrate is composed of the filament nonwoven fabric, it is possible to suppress the unevenness at the time of allowing a high molecular weight polymer solution to be cast caused by the fluffing and the defects in the membrane which occur when a staple fiber nonwoven fabric is used. Moreover, in a process of continuously forming a composite semipermeable membrane, since tension is applied to the substrate in the membrane-forming direction, it is preferred to use the filament nonwoven fabric which is excellent in dimensional stability as the substrate. In particular, in the case of allowing fibers in the substrate which are arranged on the opposite side to the porous support layer to be longitudinally oriented with respect to the membrane-forming direction, the substrate is preferred because the strength of the substrate is maintained and membrane breakage and the like can be prevented. In this context, being longitudinally oriented refers to allowing the orientation direction of fibers to be parallel to the membrane-forming direction. Conversely, in the case where the orientation direction of fibers is perpendicular to the membrane-forming direction, such orientation is referred to as lateral orientation.

The fiber orientation degree of fibers in the substrate which are arranged on the opposite side to the porous support layer preferably lies within the range of 0° to 25°. In this context, the fiber orientation degree is an index expressing the direction of fibers in a nonwoven fabric substrate constituting the porous support membrane, and refers to an average angle of fibers constituting the nonwoven fabric substrate obtained when the membrane-forming direction at the time of performing continuous membrane-forming is defined as 0° and the direction perpendicular to the membrane-forming direction, namely, the width direction of the nonwoven fabric substrate is defined as 90°. Thus, the closer the fiber orientation degree is to 0°, the more the fibers are longitudinally oriented, and the closer the fiber orientation degree is to 90°, the more the fibers are laterally oriented.

A heating step is included in the production process of a composite semipermeable membrane and the production process of an element, and a phenomenon in which the porous support membrane or the composite semipermeable membrane is allowed to shrink is caused by heating. In particular, since tension is not given in the width direction on performing continuous membrane-forming, the membrane is liable to shrink in the width direction. Since a problem is caused in the dimensional stability or the like when the porous support membrane or the composite semipermeable membrane is allowed to shrink, one that has a low thermal dimensional variation ratio is desirable as the substrate.

In the case where the orientation degree difference between the fibers arranged on the opposite side to the porous support layer and the fibers arranged on the porous support layer side is 10° to 90° in the nonwoven fabric substrate, it is preferred because the variation in the width direction due to heat can be suppressed.

It is preferred that the air permeability of the substrate be 2.0 $cc/cm^2/sec$ or more. In the case where the air permeability lies within this range, the water permeability of the composite semipermeable membrane is enhanced. It is thought that this is because, at the time of allowing a high molecular weight polymer to be cast on a substrate and allowing the substrate to be immersed in a coagulation bath in a step of forming a porous support membrane, the nonsolvent substitution speed in the solvent substitution developed on the side of the substrate is increased and the internal structure of the porous support layer is changed, and in a subsequent step of forming a separation-functional layer, the amount of monomers retained and the diffusion speed thereof are affected.

In this connection, the air permeability can be measured with a Frazier type tester in accordance with JIS L1096 (2010) . For example, a substrate is cut into a size of 200 mm by 200 mm to prepare a sample. By allowing this sample to be fitted to the Frazier type tester and adjusting a suction fan and an air hole so that a pressure indicated by an inclined barometer becomes 125 Pa, at this time, the amount of air allowed to pass through the substrate, that is, the air permeability can be calculated from a pressure indicated by a vertical barometer and the kind of the air hole used. As the Frazier type tester, KES-F8-AP1 available from Kato tech Co., Ltd., or the like can be used.

Moreover, the thickness of the substrate preferably lies within the range of 10 μm or more and 200 μm or less, more preferably lies within the range of 30 μm or more and 120 μm or less.

With regard to the kind of a resin which is cast on the substrate, for example, a polysulfone, cellulose acetate, polyvinyl chloride, or a mixture thereof is preferably used. A polysulfone which is high in chemical, mechanical and thermal stability is especially preferred. Specifically, in the case where a polysulfone having the repeating unit represented by the following chemical formula is used, it is preferred because the pore size of the porous support membrane is easily controlled and the membrane is high in dimensional stability.

[Chemical formula 1]

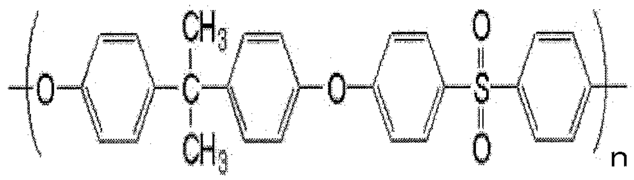

For example, by allowing a solution of the above-mentioned polysulfone in N,N-dimethylformamide (DMF) to be cast on a densely woven polyester cloth or polyester nonwoven fabric while keeping the thickness constant and allowing it to undergo wet coagulation in water, a porous support membrane having fine pores with a diameter of several tens of nanometers or less on the most part of the surface can be obtained.

The thickness of the porous support membrane has an effect on the strength of the resulting composite semipermeable membrane and the packing density of an element prepared therewith. In order to attain sufficient mechanical strength and packing density, the thickness of the porous support membrane preferably lies within the range of 50 μm or more and 300 μm or less, more preferably lies within the range of 100 μm or more and 250 μm or less.

The form of the porous support layer can be observed with a scanning electron microscope, a transmission electron microscope or an atomic force microscope. For example, in the case of observing with a scanning electron microscope, the porous support layer is stripped off from the substrate, after which this is cut into pieces by a freeze-fracture method to prepare a sample for cross-section observation. This sample is coated with platinum, platinum-palladium or ruthenium tetrachloride, preferably thinly with ruthenium tetrachloride and observed with an ultra-high resolution field emission scanning electron microscope (UHR-FE-SEM) at an acceleration voltage of 3 to 15 kV. As the ultra-high resolution field emission scanning electron microscope, S-900 type electron microscope available from Hitachi, Ltd., or the like can be used.

The porous support membrane used in the present invention may be selected from various commercially available materials such as "Millipore filter VSWP" (trade name) available from Millipore, and "Ultrafilter UK10" (trade name) available from Toyo Roshi Kaisha, Ltd., and may be produced according to a method described in "Office of Saline Water Research and Development Progress Report" No. 359 (1968), or the like.

The thickness of the porous support layer preferably lies within the range of 20 μm or more and 40 μm or less. In the case where the thickness of the porous support layer is 20 μm or more, since a uniform porous support membrane having no defect as well as improved pressure resistance can be attained, the composite semipermeable membrane including such a porous support layer can exhibit improved salt rejection performance. When the thickness of the porous support layer exceeds 40 μm, the remaining amount of unreacted material left behind during the production is increased, and therefore, the water permeability is lowered and the chemical resistance is lowered.

In this connection, the thickness of the substrate and the thickness of the composite semipermeable membrane can be measured with a digital thickness gauge. Moreover, since the thickness of the separation-functional layer is extremely thin compared to that of the porous support membrane, the thickness of the composite semipermeable membrane can be considered as the thickness of the porous support membrane. Thus, by measuring the thickness of the composite semipermeable membrane with a digital thickness gauge and subtracting the thickness of the substrate from the thickness of the composite semipermeable membrane, the thickness of the porous support layer can be simply calculated. As the digital thickness gauge, PEACOCK available from OZAKI MFG. CO., LTD., or the like can be used. In the case of using a digital thickness gauge, the thickness is measured at 20 points and an average value thereof is calculated.

In this connection, in the case of being difficult to measure the thickness of the substrate or the thickness of the composite semipermeable membrane with a digital thickness gauge, the thickness may be measured with a scanning electron microscope. By measuring thicknesses from electron photomicrographs for cross-section observation which are photographed at five arbitrary points per sample and calculating an average value, the thickness can be determined.

1-2. Separation-functional layer

The separation-functional layer is a layer that bears a separation function of a solute in the composite semipermeable membrane. The constitution such as the composition and thickness of the separation-functional layer is set according to the purpose of use of the composite semipermeable membrane.

Specifically, a polyamide separation-functional layer is made of a crosslinked polyamide obtained by the interfacial polycondensation of a polyfunctional amine with a polyfunctional acyl halide.

In this context, the polyfunctional amine is made up of at least one component selected from among an aromatic polyfunctional amine and an aliphatic polyfunctional amine.

The aromatic polyfunctional amine is an aromatic amine having 2 or more amino groups in one molecule and is not particularly limited, and examples of the aromatic polyfunctional amine include meta-phenylenediamine, para-phenylenediamine, 1,3,5-triaminobenzene and the like. Moreover, examples of an N-alkylated compound thereof include N,N-dimethyl meta-phenylenediamine, N,N-diethyl meta-phenylenediamine, N,N-dimethyl para-phenylenediamine, N,N-diethyl para-phenylenediamine and the like. From the viewpoint of stability of performance demonstration, meta-phenylenediamine or 1,3,5-triaminobenzene is especially preferred.

Moreover, the aliphatic polyfunctional amine is an aliphatic amine having 2 or more amino groups in one molecule, and preferable examples thereof include a piperazine-based amine and derivatives thereof. For example, piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, 2,5-di-n-butylpiperazine, ethylenediamine and the like can be mentioned. From the viewpoint of stability of performance demonstration, piperazine or 2, 5-dimethylpiperazine is especially preferred.

These polyfunctional amines may be used alone or as a mixture of two or more thereof.

The polyfunctional acyl halide is an acyl halide having 2 or more halogenated carbonyl groups in one molecule and is not particularly limited as long as the acyl halide is one that gives a polyamide by the reaction with the above-mentioned amine. As the polyfunctional acyl halide, for example, halides of oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, 1,3,5-benzenetricarboxylic acid, 1,2,4-benzenetricarboxylic acid, 1,3-benzenedicarboxylic acid, 1,4-benzenedicarboxylic acid and the like can be used. Among these acyl halides, acyl chlorides are preferred, and in particular, from the viewpoint of economy, easy availability, ease of handling, ease of reactivity and the like, trimesoyl chloride which is an acyl halide of 1,3, 5-benzenetricarboxylic acid is preferred. These polyfunctional acyl halides may be used alone or as a mixture of two or more thereof.

As a result of extensive researches, the present inventors have found that a close relationship exists between the zeta potential of a separation-functional layer and the salt rejection performance, water permeability and chemical durability of a composite semipermeable membrane. The polyamide separation-functional layer has amino groups and carboxyl groups, and the value of the zeta potential varies with the dissociation degree of those functional groups. The zeta potential of the separation-functional layer at pH 6 is associated with the salt rejection performance and water permeability, and in the case where the zeta potential at pH 6 is -20 mV or lower, the salt rejection performance and water permeability of a composite semipermeable membrane are enhanced. It is thought that this is because, when the zeta potential of the separation-functional layer becomes low, the electrostatic repulsion is enlarged and the hydrophilicity is enhanced. Moreover, the zeta potential difference between potentials of the separation-functional layer at pH 10 and pH 3 is associated with the chemical durability of a composite semipermeable membrane, and in the case of being 25 mV or smaller, the chemical durability of a composite semipermeable membrane is enhanced. It is thought that this is because, when the zeta potential difference between potentials of the separation-functional layer at pH 10 and pH 3 is great, the scission of hydrogen bonds due to the electrostatic repulsion and the like and the elution of a low molecular weight oligomer and the like take place and the chemical durability is lowered.

In this connection, the zeta potential can be measured with an electrophoretic light scattering photometer. For example, a composite semipermeable membrane is fitted into a cell for a flat sheet sample so that the separation-functional layer face of the composite semipermeable membrane is brought into contact with a solution of particles to be monitored, and the zeta potential is measured. The particles to be monitored are ones obtained by coating polystyrene latex with hydroxypropyl cellulose, and the particles are dispersed in a 10 mM-NaCl solution to prepare a solution of particles to be monitored. By previously adjusting the pH of a solution of particles to be monitored, the zeta potential at a predetermined pH can be measured. As the electrophoretic light scattering photometer, ELS-8000 available from Otsuka Electronics Co., Ltd., or the like can be used.

Examples of a method of controlling the zeta potential of the separation-functional layer include a method of controlling the amount of functional groups which the separation-functional layer has so as to be decreased at the time of forming the separation-functional layer, a method of allowing the functional groups which the separation-functional layer has to be converted, a method of coating the surface of the separation-functional layer with a polymer, and the like. A plurality of these methods may be used in combination. However, although the chemical durability of the composite

semipermeable membrane is enhanced in the method of allowing a polymer to be coated, the method is not preferred because the water permeability of the membrane is lowered.

Examples of the method of allowing the functional groups which the separation-functional layer has to be converted include a method of bringing the separation-functional layer into contact with a reagent reactive with an amino group or a carboxyl group. Examples thereof include a method of bringing the polyamide separation-functional layer into contact with nitric acid and a salt thereof, a nitrosyl compound, and the like and converting a primary amino group into a diazonium salt or a derivative thereof. By changing the concentration of a reagent to be reacted, or the reaction temperature and the reaction time at the time of reaction, the zeta potential of the separation-functional layer can be controlled. Moreover, since the zeta potential of the resulting separation-functional layer is also affected by the amount of functional groups before the reaction at the time of allowing the functional groups to be converted, for example, it is possible to control the zeta potential of the separation-functional layer by a method of making the thickness of the porous support layer thin to decrease the remaining amount of unreacted material left behind during the production or a method of forming a separation-functional layer and then removing a compound having a functional group by hot water washing. However, when the temperature of hot water in the hot water washing is too high as described below, the chemical durability of the resulting membrane may be lowered.

Examples of the method of controlling the amount of functional groups which the separation-functional layer has so as to be decreased at the time of forming the separation-functional layer include a method of applying an organic solvent solution containing a polyfunctional acyl halide and then heating, a method of adding an acid trapping agent to an aqueous polyfunctional amine solution or an organic solvent solution containing a polyfunctional acyl halide, and the like.

An infrared absorption spectrum of the separation-functional layer surface is measured in a heating process using an ATR method and the peak of the amide II absorption band of the amide group that appears in the range of $1540 \pm 10\ cm^{-1}$ is measured. It is preferred that the difference between a peak top frequency of the amide II absorption band of the amide group at 30°C and a peak top frequency of the amide II absorption band of the amide group at 120°C be 5 $cm^{-1}$ or smaller. It is thought that the amide II absorption band of the amide group is a peak associated with a hydrogen bond. The reason why the position of a peak top of the amide II absorption band of the amide group is shifted due to the difference in temperature is that hydrogen bonds formed at 30°C are cut by being heated to 120°C, and on that occasion, the structural change is observed as the peak shift. When the peak shift is 5 $cm^{-1}$ or smaller, even in the case where hydrogen bonds are cut, the structural change generated is small and the chemical durability of the membrane is enhanced.

Furthermore, it is preferred that Value X calculated from the following equation (1) be 0.80 or more when an infrared absorption spectrum of the separation-functional layer surface is measured in a heating process using an ATR method.

Equation (1)

$$X = Abs\ (120°C)/Abs\ (30°C)$$

Abs (120°C) is infrared absorption intensity at 1545 $cm^{-1}$ obtained when measured at 120°C and Abs (30°C) is infrared absorption intensity at 1545 $cm^{-1}$ obtained when measured at 30°C. In this connection, the infrared absorption intensity is a value obtained after subjecting measurement data to primary baseline correction ranging from 1000 $cm^{-1}$ to 1900 $cm^{-1}$ and normalizing the data by defining the infrared absorption intensity at 1250 $cm^{-1}$ as 1.

It is thought that the infrared absorption intensity at 1545 $cm^{-1}$ is associated with the hydrogen bond as in the case of the peak shift, and when the Value X is 0.80 or more, even in the case where hydrogen bonds are cut, the structural change generated is small and the chemical durability of the membrane is enhanced.

In this connection, the infrared absorption spectrum can be measured by an ATR-FT-IR method. For example, by using an apparatus provided with a single reflection heated ATR measurement accessory and allowing the separation-functional layer surface to be heated from 30°C to 120°C at intervals of 10°C, the infrared absorption spectrum at each of the temperatures is measured. As an FT-IR spectrometer, Varian 670-IR available from Varian Inc. or the like can be used, and as the apparatus provided with a single reflection heated ATR measurement accessory, Heated Golden Gate ATR available from Specac Limited or the like can be used.

Examples of a method of controlling the peak shift of the infrared absorption spectrum and the Value X calculated from the infrared absorption intensity include a method of controlling heat applied to the separation-functional layer, a method of treating the separation-functional layer with an acid, an alcohol or the like, and the like. In any of the foregoing methods, it is important to control hydrogen bonds of the separation-functional layer. For example, at the time of forming a separation-functional layer, residual monomers may be washed off with water after the separation-functional layer is

formed. On that occasion, in the case where the separation-functional layer is washed with hot water at a high temperature and then rapidly cooled, since hydrogen bonds are formed in an unstable state in the separation-functional layer made of a polyamide, the chemical durability of the membrane is lowered. Accordingly, it is preferred that heat applied to the separation-functional layer be controlled to allow hydrogen bonds to be formed in a stable state by lowering the temperature of water used for washing and allowing the separation-functional layer to be slowly cooled after being washed.

It is preferred that the mean-square surface roughness (Rms) of the separation-functional layer be 60 nm or more. When the mean-square surface roughness is 60 nm or more, the surface area of the separation-functional layer is large and the water permeability is enhanced.

In this connection, the mean-square surface roughness can be measured with an atomic force microscope (AFM). The mean-square surface roughness is a root mean square value of the deviations from a reference surface to a designated surface. In this context, a measuring surface refers to a surface expressed by all measured data, the designated surface is a surface which is the object for roughness measurement and refers to a specific portion designated on the measuring surface by a clip, and the reference surface refers to a plane surface represented by Z = Z0 when the average value of heights of the designated surface is defined as Z0. For example, as an AFM, NanoScope IIIa available from Digital Instruments can be used.

The mean-square surface roughness of the separation-functional layer can be controlled by the monomer concentration and temperature at the time of forming the separation-functional layer by interfacial polycondensation. For example, the mean-square surface roughness becomes small when the temperature at the time of interfacial polycondensation is low, and the mean-square surface roughness becomes large when the temperature is high. Moreover, when the separation-functional layer surface is subjected to a coating treatment with a polymer, the mean-square surface roughness becomes small.

The separation-functional layer may contain an azo compound. The azo compound is an organic compound having an azo group (-N=N-), and at the time of allowing the separation-functional layer to be brought into contact with a reagent reactive with an amino group or a carboxyl group, the compound is generated and retained in the separation-functional layer.

In the case of allowing the separation-functional layer to be brought into contact with a reagent reactive with an amino group or a carboxyl group, the azo compound content ratio of the parts excluding the substrate among the parts of the composite semipermeable membrane, that is, the separation-functional layer and the porous support layer is preferably 0.01% by weight or more and preferably 0.05% by weight or less. When the azo compound content ratio is 0.01% by weight or more, the salt rejection performance is enhanced. Moreover, when the azo compound content ratio is 0.05% by weight or less, the water permeability is enhanced and the chemical durability is enhanced since the elution of unreacted material is suppressed.

In this connection, in the present invention, the content ratio of the azo compound refers to a value obtained by converting an absorbance of an extraction liquid obtained by immersing the composite semipermeable membrane from which the substrate is excluded as described below in ethanol into an amount of chrysoidine ($C_{12}H_{13}ClN_4$) which is a known azo compound.

Specifically, the azo compound content ratio can be measured by the following procedure. A composite semipermeable membrane is cut into a piece of 10 by 10 cm, and the substrate is stripped off from the piece to obtain a porous support layer and a separation-functional layer. The layers are immersed in 20 g of ethanol for 8 hours, after which the ingredient extracted with ethanol is analyzed with an ultraviolet-visible-near infrared spectrophotometer. As the ultraviolet-visible-near infrared spectrophotometer, UV-2450 available from Shimadzu Corporation, or the like can be used.

Then, the porous support layer and the separation-functional layer taken out of ethanol are heated at 120°C for 2 hours to dry, and allowed to cool to room temperature in a desiccator, after which the weight measurement is performed. From an absorbance at 450 nm derived from the ingredient extracted with ethanol, the calibration curve of the absorbance at a wavelength of 450 nm derived from chrysoidine which is a reference material, and the dried membrane weight of the porous support layer and the separation-functional layer, the azo compound content ratio of the parts excluding the substrate among the parts of the composite semipermeable membrane can be calculated.

In the case of allowing the separation-functional layer to be brought into contact with a reagent reactive with an amino group or a carboxyl group, the yellowness index of the separation-functional layer is preferably 15 or more and 50 or less, more preferably 20 or more and 45 or less. The yellowness index varies with the amounts of the azo compound and the azo group in the separation-functional layer. When the yellowness index of the separation-functional layer is less than 15, the salt rejection performance is lowered since the amount of the azo compound in the separation-functional layer is decreased. When the yellowness index exceeds 50, the water permeability is lowered and the chemical durability is also lowered since the amount of the azo compound is increased.

The yellowness index refers to a shifting degree of the hue of a polymer from a colorless state or a white color toward a yellow color which is laid down in the Japanese Industrial Standard JIS K7373 (2006), and is expressed as a positive value. The yellowness index of the separation-functional layer can be measured with a color meter. For example,

in the case of measuring the yellow index of the composite semipermeable membrane in which a separation-functional layer is disposed on a porous support membrane, a reflection measuring method is convenient. Moreover, by allowing the composite semipermeable membrane to be placed on a glass plate so that the separation-functional layer faces downward and allowing the porous support membrane to be dissolved in a solvent which dissolves only the porous support membrane and to be removed, the separation-functional layer sample left behind on the glass plate can also be measured for the yellowness index by a transmission measuring method. In this connection, at the time of allowing the composite semipermeable membrane to be placed on a glass plate, it is preferred that the substrate of the porous support membrane be previously stripped off. As the color meter, the SM Colour Computer SM-7 available from Suga Test Instruments Co., Ltd., or the like can be used.

2. Production method

Next, a production method of the composite semipermeable membrane will be described. The production method includes a step of forming a porous support membrane and a step of forming a separation-functional layer.

(2-1) Step of forming porous support membrane

The step of forming a porous support membrane includes a step of applying a polymer solution to a substrate, and a step of allowing the substrate to which the solution is applied to be immersed in a coagulation bath and allowing the polymer to undergo coagulation.

In the step of applying a polymer solution to a substrate, the polymer solution is prepared by dissolving a polymer that is a constituent of a porous support layer in a good solvent for the polymer.

In the case where a polysulfone is used as the polymer, the temperature of the polymer solution at the time of applying the polymer solution preferably lies within the range of 10°C to 60°C. When the temperature of the polymer solution lies within this range, the polymer does not precipitate, the substrate is allowed to be sufficiently impregnated with the polymer solution even between fibers of the substrate, and then the polymer solution is solidified. As a result, the porous support layer is firmly joined to the substrate by an anchor effect, and an improved porous support membrane can be obtained. In this connection, the preferable temperature range for the polymer solution can be appropriately adjusted according to the kind of the polymer to be used, a desired solution viscosity, and the like.

After the polymer solution is applied to a substrate, it is preferred that the time until the substrate is immersed in a coagulation bath lie within the range of 0.1 to 5 seconds. When the time until being immersed in a coagulation bath lies within this range, the substrate is allowed to be sufficiently impregnated with an organic solvent solution containing the polymer even between fibers of the substrate, and then the organic solvent solution is solidified. In this connection, the preferable range for the time until being immersed in a coagulation bath can be appropriately adjusted according to the kind of the polymer solution to be used, a desired solution viscosity, and the like.

Although water is usually used as a liquid contained in a coagulation bath, the liquid needs only to be one which does not dissolve the polymer that is a constituent of a porous support layer. The membrane form of the resulting porous support membrane varies with the composition of a liquid contained in a coagulation bath, and therefore, the resulting composite semipermeable membrane is also varied. The temperature of a coagulation bath is preferably -20°C to 100°C. The temperature is further preferably 10°C to 50°C. When the temperature of a coagulation bath exceeds this range, the vibration of a coagulation bath face becomes vigorous by thermal motion and the smoothness of the membrane surface after forming the membrane is liable to be lowered. Conversely, when the temperature is too low, the coagulation speed becomes slow and the membrane-forming properties are deteriorated.

Next, the porous support membrane thus obtained is washed with hot water in order to remove the solvent remaining in the membrane. In this case, the temperature of hot water is preferably 40°C to 100°C, further preferably 60°C to 95°C. When the temperature exceeds this range, the degree of shrinkage of the porous support membrane is increased and the water permeability is lowered. Conversely, when the temperature is too low, the washing effect is small.

(2-2) Step of forming separation-functional layer

Next, the step of forming a separation-functional layer constituting the composite semipermeable membrane will be described. In the step of forming a polyamide separation-functional layer, using an aqueous solution containing the above-mentioned polyfunctional amine and an organic solvent solution containing the above-mentioned polyfunctional acyl halide, the interfacial polycondensation is performed on the surface of the porous support membrane to form a polyamide separation-functional layer.

The organic solvent which dissolves the polyfunctional acyl halide may be any one of solvents as long as the solvent is immiscible with water, does not destroy the porous support membrane, and does not inhibit the formation reaction of a crosslinked polyamide. Typical examples thereof include a liquid hydrocarbon and a halogenated hydrocarbon such as trichlorotrifluoroethane. In view of being a substance which does not destroy the ozone layer, easy availability, ease of handling and handling safety, octane, nonane, decane, undecane, dodecane, tridecane, tetradecane, heptadecane, hexadecane and the like, and a simple substance such as cyclooctane, ethylcyclohexane, 1-octene and 1-decene, or a mixture thereof are preferably used.

To an aqueous polyfunctional amine solution and an organic solvent solution containing a polyfunctional acyl halide, as necessary, a compound such as an acylation catalyst, a polar solvent, an acid scavenger, a surfactant and an oxidation inhibitor may be added as long as the compound does not impede a reaction between both the components.

First, in order to perform interfacial polycondensation on the surface of the porous support membrane, a porous support membrane surface is covered with an aqueous polyfunctional amine solution. In this context, the concentration of the aqueous solution containing a polyfunctional amine is preferably 0.1% by weight or more and 20% by weight or less, more preferably 0.5% by weight or more and 15% by weight or less.

With regard to a method of covering the porous support membrane surface with the aqueous polyfunctional amine solution, the surface of the porous support membrane needs only to be uniformly and continuously covered with the aqueous solution, and the covering may be performed with known application means, for example, by a method of coating the porous support membrane surface with the aqueous solution, a method of immersing the porous support membrane in the aqueous solution, or the like. The contact time between the porous support membrane and the aqueous polyfunctional amine solution preferably lies within the range of not less than 5 seconds to not more than 10 minutes, further preferably lies within the range of not less than 10 seconds to not more than 3 minutes. Then, it is preferred that an excessively applied aqueous solution be removed in a liquid draining step. Examples of a method of liquid draining include a method of holding the membrane so that the membrane surface is directed along a vertical direction and allowing the liquid to naturally flow down, and the like. After liquid draining, the membrane surface may be dried to remove all or part of the water in the aqueous solution.

Then, the above-mentioned organic solvent solution containing a polyfunctional acyl halide is applied to the porous support membrane covered with the aqueous polyfunctional amine solution to allow a separation-functional layer made of a crosslinked polyamide to be formed by the interfacial polycondensation. The time for performing interfacial polycondensation is preferably 0.1 second or more and 3 minutes or less, more preferably 0.1 second or more and 1 minute or less.

Although the concentration of a polyfunctional acid halide in the organic solvent solution is not particularly limited, the concentration is preferably about 0.01% by weight or more and 1.0% by weight or less, since there is a possibility that the formation of the separation-functional layer which is an active layer becomes insufficient and defects are caused when the concentration is too low, and it is disadvantageous from an aspect of cost when the concentration is too high.

Next, it is preferred that the organic solvent solution after the reaction be removed in a liquid draining step. For the removal of the organic solvent, for example, a method of allowing the membrane to be grasped along a vertical direction and allowing the excess organic solvent to naturally flow down and to be removed can be used. In this case, the time for allowing the membrane to be grasped along a vertical direction preferably lies within the range of not less than 1 minute to not more than 5 minutes, more preferably lies within the range of not less than 1 minute to not more than 3 minutes. When the time for grasping is not less than 1 minute, a separation-functional layer having an objective function is easily obtained, and when the time is not more than 3 minutes, the performance degradation can be suppressed since the occurrence of defects due to overdrying of the organic solvent can be suppressed.

Furthermore, with regard to the composite semipermeable membrane obtained by the above-mentioned method, by adding a step of subjecting the membrane to a washing treatment with hot water at a temperature within the range of 25°C to 90°C for 1 minute to 60 minutes, it is possible to further enhance the solute screening performance and the water permeability of the composite semipermeable membrane. However, in the case where the temperature of hot water is too high, when the membrane is rapidly cooled after the hot water washing treatment, the chemical durability is lowered. On that account, it is preferred that the hot water washing be performed at a temperature within the range of 25°C to 60°C. Moreover, in the case where a hot water washing treatment is performed at a high temperature more than 60°C and not more than 90°C, it is preferred that the membrane be slowly cooled after the hot water washing treatment. For example, a method of allowing the membrane to be brought into contact with hot water at a temperature which is lowered stepwise and to be cooled to room temperature, and the like can be mentioned.

Moreover, in the above-mentioned step of washing with hot water, an acid or an alcohol may be contained in the hot water. By allowing an acid or an alcohol to be contained, it becomes easier to control the formation of hydrogen bonds in the separation-functional layer. Examples of the acid include an inorganic acid such as hydrochloric acid, sulfuric acid and phosphoric acid, an organic acid such as citric acid and oxalic acid, and the like. The concentration of the acid is preferably adjusted so that the pH becomes not more than 2, more preferably not more than 1. Examples of the alcohol include a monohydric alcohol such as methyl alcohol, ethyl alcohol and isopropyl alcohol, and a polyhydric alcohol such as ethylene glycol and glycerin. The concentration of the alcohol is preferably 10 to 100% by weight, more preferably 10 to 50% by weight.

Next, in the case of controlling the zeta potential of the separation-functional layer by a method of allowing the functional groups which the separation-functional layer has to be converted, the above-mentioned separation-functional layer is brought into contact with a reagent reactive with unreacted functional groups contained in the separation-functional layer. Although the reagent reactive therewith is not particularly limited, examples thereof include aqueous solutions of nitrous acid and a salt thereof, a nitrosyl compound, and the like which react with primary amino groups in the separation-functional layer and generate diazonium salts or derivatives thereof. With regard to the aqueous solutions of nitrous acid and a nitrosyl compound, since they are liable to generate a gas and decompose, for example, it is preferred to allow nitrous acid to be sequentially generated by the reaction of a nitrite and an acid solution. In general, a nitrite reacts with a hydrogen ion and generates nitrous acid ($HNO_2$), and nitrous acid is efficiently generated in an aqueous solution with a pH not more than 7, preferably not more than 5, and further preferably not more than 4. Of these, in view of handling convenience, an aqueous solution of sodium nitrite allowed to react with hydrochloric acid or sulfuric acid in an aqueous solution is especially preferred.

The concentration of nitrous acid or a nitrite in an aqueous solution preferably lies within the range of 0.01 to 1% by weight. In the case where the concentration is 0.01% by weight or more, a sufficient effect is easily obtained, and in the case where the nitrous acid or nitrite concentration is 1% by weight or less, the handling of the solution is facilitated.

The temperature of an aqueous nitrous acid solution is preferably 15°C to 45°C. In the case of a temperature not higher than this range, the reaction takes a long time, and in the case of a temperature not lower than 45°C, nitrous acid decomposes rapidly and the aqueous solution is difficult to handle.

The contact time with an aqueous nitrous acid solution needs only to be a time period during which diazonium salts and/or derivatives thereof are generated. Although the treatment can be performed in a short time in the case of high concentration, a long time is required in the case of low concentration. On that account, in the case of the solution with the above-mentioned concentration, it is preferred that the contact time be within 10 minutes and it is further preferred that the contact time be within 3 minutes. Moreover, a method of bringing the separation-functional layer into contact with the reagent is not particularly limited, and a solution of the reagent may be applied thereto, or the composite semipermeable membrane may be immersed in a solution of the reagent. As the solvent which dissolves the reagent, any solvent may be used as long as the solvent is capable of dissolving the reagent and the composite semipermeable membrane is not corroded thereby. Moreover, to the solution, a surfactant, an acid compound, an alkaline compound or the like may be added as long as the compound does not impede a reaction of a primary amino group with the reagent.

The parts of diazonium salts or derivatives thereof generated by the contact are allowed to react with water to be converted to phenolic hydroxyl groups. Moreover, they are also allowed to react with aromatic rings in materials forming the porous support membrane and the separation-functional layer or aromatic rings of compounds contained in the separation-functional layer to form azo groups.

Next, the composite semipermeable membrane allowing diazonium salts or derivatives thereof to be generated may be further brought into contact with a reagent reactive with diazonium salts or derivatives thereof. Examples of the reagent used herein include chloride ions, bromide ions, cyanide ions, iodide ions, fluoboric acid, hypophosphorous acid, sodium bisulfite, sulfite ions, aromatic amines, phenols, hydrogen sulfide, thiocyanic acid and the like. When diazonium salts or derivatives thereof are allowed to react with sodium bisulfite or sulfite ions, a substitution reaction occurs instantly and the amino group is substituted with the sulfo group. Moreover, by allowing them to be brought into contact with an aromatic amine or a phenol, a diazo coupling reaction occurs and it becomes possible to introduce the aromatic ring into the membrane surface. These reagents may be used alone, a plurality thereof may be mixed to be used, and the separation-functional layer may be brought into contact with different reagents plural times.

The concentration of the reagent with which the separation-functional layer is brought into contact and the time period during which they are brought into contact with each other can be appropriately adjusted to control the water permeability and the solute removability.

3. Utilization of composite semipermeable membrane

The composite semipermeable membrane according to the present invention is wound around a cylindrical water collecting pipe with many holes bored therein together with a raw water flow passage material such as plastic net, a permeated water flow passage material such as tricot, and optionally, a film for enhancing pressure resistance, and is suitably used as a spiral type composite semipermeable membrane element. Furthermore, it is also possible to obtain a composite semipermeable membrane module prepared by allowing these elements to be connected in series or in parallel and to be housed in a pressure container.

Moreover, the above-mentioned composite semipermeable membrane, elements and modules thereof can be combined with a pump for feeding raw water thereto and an apparatus for subjecting the raw water to a pretreatment to constitute a fluid separation apparatus. By using this separation apparatus, it is possible to separate raw water into permeated water such as potable water and concentrated water which does not permeate through the membrane and to obtain water suitable for a certain purpose.

EXAMPLES

Hereinafter, the present invention will be described with reference to examples, but the present invention should not be limited by these examples at all.

(NaCl rejection ratio)

To a composite semipermeable membrane, water to be evaluated which is adjusted to a temperature of 25°C, a pH of 7, and a sodium chloride concentration of 2000 ppm was supplied at an operating pressure of 1.55 MPa, and a membrane filtration treatment was performed. The electric conductivities of water to be supplied and permeated water were measured with an electric conductivity meter available from DKK-TOA CORPORATION to obtain each practical salinity concentration, namely, NaCl concentration. On the basis of the NaCl concentration thus obtained and the following equation, the NaCl rejection ratio was calculated.

$$\text{NaCl rejection ratio (\%)} = 100 \times \{1-(\text{NaCl concentration in permeated water}/\text{NaCl concentration in water to be supplied})\}$$

(Membrane permeation flux)

In the test set forth in the preceding paragraph, the amount of membrane-permeated water filtered from the water to be supplied (aqueous NaCl solution) was measured and converted into a daily amount of permeated water (cubic meter) per 1 square meter of the membrane surface. The value was defined as the membrane permeation flux ($m^3/m^2$/day).

(Chemical durability test)

A composite semipermeable membrane was immersed in an aqueous solution which is adjusted so that the pH becomes 1 with sulfuric acid for 1 hour, subsequently immersed in an aqueous solution which is adjusted so that the pH becomes 13 with sodium hydroxide for 1 hour, and finally washed with pure water, after which the performance evaluation was performed in the same manner as that mentioned above.

(Porous support layer thickness)

The thickness of a substrate before a porous support layer is formed and the thickness of a composite semipermeable membrane completed were measured with a digital thickness gauge PEACOCK available from OZAKI MFG. CO. , LTD. , and the difference therebetween was defined as the porous support layer thickness. The thickness of a substrate and the thickness of a composite semipermeable membrane each were measured at 20 points in the width direction and the average value was calculated.

$$\text{Porous support layer thickness } (\mu m) = \text{Porous support membrane thickness } (\mu m) - \text{Substrate thickness } (\mu m).$$

(Zeta potential)

A composite semipermeable membrane was washed with ultrapure water and fitted into a cell for a flat sheet sample so that the separation-functional layer face of the composite semipermeable membrane was brought into contact with a solution of particles to be monitored, and the zeta potential was measured with an electrophoretic light scattering photometer (ELS-8000) available from Otsuka Electronics Co., Ltd. As the solution of particles to be monitored, a liquid to be measured prepared by dispersing particles of polystyrene latex to be monitored in each of aqueous 10 mM-NaCl solutions which are adjusted to pH 6, pH 10 and pH 3 was used.

(Mean-square surface roughness)

A composite semipermeable membrane which was washed with ultrapure water and air-dried was cut into a

square piece with a side of 1 cm, the piece was fixed to a microscope slide with a double-sided tape, and the mean-square surface roughness (Rms) of the separation-functional layer was measured using a tapping mode with an atomic force microscope (Nanoscope IIIa: Digital Instruments). The measurement was performed under ordinary temperature and normal pressure using NCHV-1, available from Veeco Instruments Inc., as a cantilever. The scanning speed was 1 Hz, and the sampling number was 512 pixels square. Gwyddion was used as analyzing software. With regard to the measurement results, both of X-axis and Y-axis were subjected to one-dimensional baseline correction (inclination correction).

(Infrared absorption spectrum)

A composite semipermeable membrane which was washed with ultrapure water and air-dried under an atmosphere of 30°C or lower was employed as a measurement sample. By using an apparatus provided with a single reflection heated ATR measurement accessory and allowing the sample to be heated from 30°C to 120°C at intervals of 10°C, the infrared absorption spectrum of the separation-functional layer surface at each of the temperatures was measured by an ATR-FT-IR method. In this connection, as an FT-IR spectrometer, Varian 670-IR available from Varian Inc. was used, and as the apparatus provided with a single reflection heated ATR measurement accessory, Heated Golden Gate ATR available from Specac Limited was used.

(Air permeability)

The air permeability was measured with a Frazier type tester in accordance with JIS L1096 (2010). A substrate was cut into a size of 200 mm by 200 mm and fitted to the Frazier type tester. A suction fan and an air hole were adjusted so that a pressure indicated by an inclined barometer became 125 Pa, and at this time, the air permeability was determined from a pressure indicated by a vertical barometer and the kind of the air hole used. As the Frazier type tester, KES-F8-AP1 available from Kato tech Co., Ltd. was used.

(Azo compound content ratio of parts excluding substrate among parts of composite semipermeable membrane)

A piece of 10 by 10 cm was cut out of a composite semipermeable membrane, and the substrate was stripped off from the piece to obtain a porous support layer and a separation-functional layer. The layers were immersed in 20 g of ethanol for 8 hours, after which the ingredient extracted with ethanol was analyzed with an ultraviolet-visible-near infrared spectrophotometer. Then, the porous support layer and the separation-functional layer taken out of ethanol were heated at 120°C for 2 hours to dry, and allowed to cool to room temperature in a desiccator, after which the weight measurement was performed. On the basis of an absorbance at 450 nm derived from the ingredient extracted with ethanol and the calibration curve of the absorbance at a wavelength of 450 nm derived from chrysoidine which is a reference material, the weight of an azo compound extracted with ethanol was determined in terms of the weight of chrysoidine. As shown in the following equation, by dividing the azo compound weight in terms of chrysoidine thus obtained by the dried membrane weight described above, the azo compound content ratio of the parts excluding the substrate among the parts of the composite semipermeable membrane was determined.

Azo compound content ratio (%) of parts excluding substrate among parts of composite semipermeable membrane = 100 × (Azo compound weight in terms of chrysoidine/Dried membrane weight)

(Yellowness index)

A composite semipermeable membrane was dried for 4 hours in a vacuum desiccator, after which the separation-functional layer face was subjected to a reflection measurement with the SM Colour Computer SM-7 available from Suga Test Instruments Co., Ltd.

(Preparation of composite semipermeable membrane)

<Comparative Example 1>

A 15.0% by weight solution of polysulfone in dimethylformamide (DMF) was cast at room temperature (25°C) on a nonwoven fabric (air permeability of 1.0 cc/cm$^2$/sec) made of polyester fibers which is produced by a papermaking method, immediately after which the nonwoven fabric was immersed in pure water for 5 minutes to prepare a porous support membrane in which the thickness of a porous support layer is 40 μm.

Next, the porous support membrane was immersed in a 3.5% by weight aqueous solution of meta-phenylenediamine, after which the excess aqueous solution was removed, and furthermore, a solution prepared by dissolving trimesoyl chloride in an amount that the concentration thereof became 0.14% by weight in n-decane was applied so that the surface of the porous support layer was completely covered. Following this, in order to remove the excess solution from the membrane, the membrane was made vertical and liquid draining was performed. Air at 20°C was blown over the membrane using a blower to dry the membrane. Then, the membrane was washed with pure water at 40°C to obtain a composite semipermeable membrane. The composite semipermeable membrane thus obtained was evaluated, whereupon the membrane performance was determined to be the value shown in Table 1.

<Example 1>

A composite semipermeable membrane obtained in Comparative Example1 was treated at 30°C for 1 minute with a 0.30% by weight aqueous sodium nitrite solution which is adjusted to pH 3 with sulfuric acid. The composite semipermeable membrane was taken out of the aqueous nitrous acid solution, after which the membrane was washed with pure water at 20°C to obtain a composite semipermeable membrane. The composite semipermeable membrane thus obtained was evaluated, whereupon the membrane performance was determined to be the value shown in Table 1.

<Examples 2 to 4>

A composite semipermeable membrane was prepared in the same manner as that in Example 1 except that the thickness of the porous support layer was changed to that shown in Table 1. The membrane performance of the composite semipermeable membrane obtained is shown in Table 1.

<Example 5>

A composite semipermeable membrane was prepared in the same manner as that in Example 1 except that a filament nonwoven fabric (yarn diameter: 1 decitex, thickness: about 90 μm, air permeability: 2.0 cc/cm$^2$/sec) made of polyethylene terephthalate fibers was used as the substrate. The membrane performance of the composite semipermeable membrane obtained is shown in Table 1.

<Comparative Example 2>

A composite semipermeable membrane was prepared in the same manner as that in Example 1 except that the washing after drying the solution of trimesoyl chloride in n-decane was performed with pure water at 90°C. The membrane performance of the composite semipermeable membrane obtained is shown in Table 1.

<Comparative Example 3>

A 15.0% by weight solution of polysulfone in dimethylformamide (DMF) was cast at room temperature (25°C) on a nonwoven fabric (air permeability of 1.0 cc/cm$^2$/sec) made of polyester fibers which is produced by a papermaking method, immediately after which the nonwoven fabric was immersed in pure water for 5 minutes to prepare a porous support membrane in which the thickness of a porous support layer is 50 μm.

Next, the porous support membrane was immersed in an aqueous solution containing 2.0% by weight of metaphenylenediamine and 2.0% by weight of ε-caprolactam, after which the excess aqueous solution was removed, and furthermore, a solution prepared by dissolving trimesoyl chloride in an amount that the concentration thereof became 0.10% by weight in n-decane was applied so that the surface of the porous support membrane was completely covered. Following this, in order to remove the excess solution from the membrane, the membrane was made vertical and liquid draining was performed. Air at 20°C was blown over the membrane using a blower to dry the membrane. Then, the membrane was washed with pure water at 40°C to obtain a composite semipermeable membrane.

Furthermore, the composite semipermeable membrane was treated at 20°C for 1 minute with a 0.70% by weight aqueous sodium nitrite solution which is adjusted to pH 2 with sulfuric acid. Then, the membrane was washed with pure water at 20°C to obtain a composite semipermeable membrane. The membrane performance of the composite semipermeable membrane obtained is shown in Table 1.

<Comparative Example 4>

A composite semipermeable membrane obtained in Comparative Example1 was immersed in an aqueous sodium hypochlorite solution of 500 ppm which is adjusted to pH 7 for 5 minutes, after which the membrane was washed with pure water to obtain a composite semipermeable membrane. The membrane performance of the composite semipermeable membrane obtained is shown in Table 1.

<Comparative Example 5>

A 15.0% by weight solution of polysulfone in dimethylformamide (DMF) was cast at room temperature (25°C) on a nonwoven fabric (air permeability of 1.0 $cc/cm^2/sec$) made of polyester fibers which is produced by a papermaking method, immediately after which the nonwoven fabric was immersed in pure water for 5 minutes to prepare a porous support membrane in which the thickness of a porous support layer is 40 μm.

Next, the porous support membrane was immersed in an aqueous solution containing 3.0% by weight of metaphenylenediamine, 0.15% by weight of sodium lauryl sulfate, 3.0% by weight of triethylamine, 6.0% by weight of camphorsulfonic acid and 5.0% by weight of isopropyl alcohol, after which the excess aqueous solution was removed to allow a layer of the aqueous solution to be formed on the support membrane.

Subsequently, an IP1016 (an isoparaffin-based hydrocarbon oil available from Idemitsu Kosan Co., Ltd.) solution containing 0.20% by weight of trimesoyl chloride and 0.05% by weight of isopropyl alcohol was applied so that the surface of the porous support layer was completely covered. Then, the membrane was held in place for 3 minutes in a hot air dryer at 120°C and a separation-functional layer was allowed to be formed on the support to obtain a composite semipermeable membrane.

Furthermore, a solution prepared by dissolving polyvinyl alcohol (average polymerization degree: n = 2,000) with a saponification degree of 99% in an amount that the concentration thereof became 0.25% by weight in a 3 : 7 solution of isopropyl alcohol and water was applied on the composite semipermeable membrane, and dried for 5 minutes at 130°C to obtain a composite semipermeable membrane in which the separation-functional layer is coated with polyvinyl alcohol. The membrane performance of the composite semipermeable membrane obtained is shown in Table 1.

In Examples 1 to 5, the porous support layer thickness is 20 to 40 μm, the zeta potential at pH 6 is -20 mV or lower, and the zeta potential difference between potentials at pH 10 and pH 3 is 25 mV or smaller. With regard to these composite semipermeable membranes, the flux ratio determined by dividing the membrane permeation flux after a chemical durability test by the initial (namely, before a chemical durability test) membrane permeation flux is 1.06 to 1.08. The closer the flux ratio between before and after the chemical durability test is to 1, the more the composite semipermeable membrane becomes difficult to be changed by an acid or an alkali, namely, the more improved chemical durability the membrane has. Moreover, the composite semipermeable membranes in Examples 1 to 5 exhibit improved NaCl rejection ratio and improved membrane permeation flux.

In the cases where the composite semipermeable membranes in Comparative Examples 1 to 4 have a zeta potential difference between potentials at pH 10 and pH 3 of 25 mV or greater, the membrane permeation flux ratio between before and after the chemical durability test becomes not less than 1.1 and the chemical durability is lowered. Moreover, the composite semipermeable membrane of Comparative Example 3 exhibits a low NaCl rejection ratio. In Comparative Example 5, the zeta potential at pH 6 is -20 mV or higher and a low NaCl rejection ratio is exhibited. Moreover, the mean-square surface roughness is 60 nm or less and a low membrane permeation flux is exhibited.

As stated above, the composite semipermeable membrane of this patent has high water permeability and high salt rejection performance and has high acid durability and high alkali durability.

[Table 1]

| | Zeta potential | | AFM | Infrared absorption spectrum | | Porous support layer thickness | Separation-functional layer yellowness index | Azo compound content ratio | Initial performance | | After chemical durability test | | |
|---|---|---|---|---|---|---|---|---|---|---|---|---|---|
| | pH6 | Difference between potentials at pH 10 and pH 3 | Mean-square surface roughness | Peak frequency difference | Infrared absorption intensity ratio | | | | NaCl rejection ratio | Membrane permeation flux | NaCl rejection ratio | Membrane permeation flux | Flux ratio |
| | (mV) | (mV) | (nm) | ($cm^{-1}$) | X | (μm) | | (% by weight) | (%) | ($m^3/m^2/d$) | (%) | ($m^3/m^2/d$) | |
| Example 1 | -30 | 23 | 83 | 5 | 0.81 | 40 | 48 | 0.052 | 99.7 | 1.3 | 99.6 | 1.4 | 1.08 |
| Example 2 | -32 | 20 | 82 | 4 | 0.83 | 30 | 37 | 0.035 | 99.7 | 1.5 | 99.6 | 1.6 | 1.07 |
| Example 3 | -35 | 17 | 80 | 3 | 0.84 | 20 | 24 | 0.018 | 99.6 | 1.7 | 99.5 | 1.8 | 1.06 |
| Example 4 | -37 | 20 | 79 | 3 | 0.85 | 10 | 15 | 0.010 | 99.3 | 1.8 | 99.2 | 1.9 | 1.06 |
| Example 5 | -32 | 22 | 85 | 5 | 0.82 | 40 | 45 | 0.048 | 99.7 | 1.4 | 99.6 | 1.5 | 1.07 |
| Comparative Example 1 | -38 | 46 | 83 | 6 | 0.80 | 40 | - | - | 99.2 | 1.0 | 98.9 | 1.4 | 1.40 |
| Comparative Example 2 | -27 | 28 | 81 | 10 | 0.73 | 40 | 10 | 0.003 | 99.4 | 1.5 | 99.3 | 1.7 | 1.13 |
| Comparative Example 3 | -24 | 27 | 90 | 6 | 0.79 | 50 | 13 | 0.008 | 99.1 | 2.0 | 98.9 | 2.2 | 1.10 |
| Comparative Example 4 | -49 | 36 | 83 | 7 | 0.78 | 40 | - | - | 99.7 | 1.3 | 99.6 | 1.5 | 1.15 |
| Comparative Example 5 | -2 | 10 | 30 | 8 | 0.76 | 40 | - | - | 99.1 | 0.7 | 99.0 | 0.9 | 1.29 |

INDUSTRIAL APPLICABILITY

By using the composite semipermeable membrane according to the present invention, it is possible to separate raw water into permeated water such as potable water and concentrated water which does not permeate through the membrane and to obtain water suitable for a certain purpose. In particular, the composite semipermeable membrane according to the present invention can be suitably used for desalination of saline water or seawater.

## Claims

1. A composite semipermeable membrane comprising a porous support membrane made of a substrate and a porous support layer and a polyamide separation-functional layer disposed on the porous support layer, wherein the zeta potential of the separation-functional layer at pH 6 is -20 mV or lower, and the zeta potential difference between potentials of the separation-functional layer at pH 10 and pH 3 is 25 mV or smaller.

2. The composite semipermeable membrane according to claim 1, wherein the mean-square surface roughness of the separation-functional layer is 60 nm or more.

3. The composite semipermeable membrane according to claim 1 or 2, wherein the difference between a peak top frequency of an amide group at 30°C and a peak top frequency of an amide group at 120°C is 5 $cm^{-1}$ or smaller when an infrared absorption spectrum of the separation-functional layer surface is measured in a heating process using an ATR method and a peak of an amide group that appears in the range of 1540 $\pm$ 10 $cm^{-1}$ is measured.

4. The composite semipermeable membrane according to claim 3, wherein Value X calculated from the following equation (1) is 0.80 or more when an infrared absorption spectrum of the separation-functional layer surface is measured in a heating process using an ATR method:

Equation (1)

$$X = Abs\ (120°C)/Abs\ (30°C)$$

Abs (120°C) is infrared absorption intensity at 1545 $cm^{-1}$ obtained when measured at 120°C and Abs (30°C) is infrared absorption intensity at 1545 $cm^{-1}$ obtained when measured at 30°C; in this connection, the infrared absorption intensity is a value obtained after subjecting measurement data to primary baseline correction ranging from 1000 $cm^{-1}$ to 1900 $cm^{-1}$ and normalizing the data by defining the peak at 1250 $cm^{-1}$ as 1.

5. The composite semipermeable membrane according to any one of claims 1 to 4, wherein the substrate of the porous support membrane is a polyester filament nonwoven fabric and the air permeability thereof is 2.0 $cc/cm^2/sec$ or more.

6. The composite semipermeable membrane according to any one of claims 1 to 5, wherein the thickness of the porous support layer is 20 to 40 $\mu m$.

## INTERNATIONAL SEARCH REPORT

International application No. PCT/JP2012/074322

A. CLASSIFICATION OF SUBJECT MATTER
*B01D71/56*(2006.01)i, *B01D69/10*(2006.01)i, *B01D69/12*(2006.01)i, *C08G69/02*(2006.01)i

According to International Patent Classification (IPC) or to both national classification and IPC

B. FIELDS SEARCHED

Minimum documentation searched (classification system followed by classification symbols)
B01D71/56, B01D69/10, B01D69/12, C08G69/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/078131 A1 (Toray Industries, Inc.), 30 June 2011 (30.06.2011), examples 1 to 13 & CN 102665883 A | 1-5<br>1,2,6 |
| Y | JP 2010-540215 A (The Regents of the University of California), 24 December 2010 (24.12.2010), claim 1; paragraphs [0002], [0217] to [0226] & WO 2009/039467 A1 | 1,2 |
| Y | Norihito IKEJIMA et al., "Teiatsu Gyaku Shintomaku no Yoshitsu Bunri ni Oyobosu Maku ζ -Den'i no Eikyo", Dai 56 Kai Proceedings of the Annual Conference of the Japan Society of Civil Engineers Dai 7 Bu, vol.56, no.7, 02 October 2001 (02.10.2001), pages 386 to 387 | 1 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>18 December, 2012 (18.12.12) | Date of mailing of the international search report<br>08 January, 2013 (08.01.13) |
| Name and mailing address of the ISA/<br>Japanese Patent Office<br><br>Facsimile No. | Authorized officer<br><br>Telephone No. |

Form PCT/ISA/210 (second sheet) (July 2009)

**INTERNATIONAL SEARCH REPORT**

International application No.
PCT/JP2012/074322

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2006/038426 A1 (Nitto Denko Corp.), 13 April 2006 (13.04.2006), paragraphs [0001], [0043] & US 2008/0257818 A1 | 6 |
| A | JP 2001-38175 A (Toyobo Co., Ltd.), 13 February 2001 (13.02.2001), claims & US 2003/0136727 A1 | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011125856 A
- JP 63054905 A
- WO 9734686 A
- JP 10066972 A


### Non-patent literature cited in the description


- *Japanese Industrial Standard JIS K7373,* 2006